# EUROPEAN PATENT APPLICATION

(11) **EP 1 768 347 A1**
(43) Date of publication of application: **28.03.2007**
(21) Application number: 05291959.4
(22) Date of filing: 21.09.2005
(51) Int. Cl.: H04L 29/08, H04N 5/00

(54) **Device for recording a broadcasted programme**

(71) Applicant: Alcatel, 75008 Paris (FR)
(72) Inventor: Six, Erwin Alfons Constant, 9270 - Kalken (BE); Claes, Erik Johan Chris, 2610 - Wilrijk (BE)
(74) Representative: Narmon, Gisèle Marie Thérèse

(57) **Abstract**

The device of the application has a programme memory (412) wherein fragments of a broadcasted programme are temporarily stored, and is able to share programme fragments with similar devices in order to recompose the broadcasted programme at a time-shifted moment. By integrating devices according to the invention in network nodes, like for instance access network aggregating nodes (DSLAMs, DLCs, Fibre Aggregators, remote DSLAMs), and/or switches, routers and/or home-based terminals, a distributed Personal Video Recorder is for instance realized.

## Description

### Field of the Invention

The present invention generally relates to recording of broadcasted (or multi-casted) programmes such as broadcasted TV programmes or radio programmes in packet networks. Recording broadcasted programmes enables time-shifted delivery of such programme to a user or subscriber of the broadcast service and time-shifted experiencing of such programme by the user, thereby freeing the viewer or listener from the constraints of the broadcast schedule. With time-shifted TV viewing for instance, the user does not need to come home in time to watch a scheduled TV show or live broadcasted event. The recorded TV programme is waiting for the viewer to arrive, any time.

### Background of the Invention

The existing solutions for recording broadcasted TV programmes and offering time-shifted TV service to the consumer can be grouped in two categories: the home-based approach where the consumer has a home-based device which offers this service, typically called a PVR or Personal Video Recorder, and the network-based approach where a server of an application service provider offers the consumer the same experience.

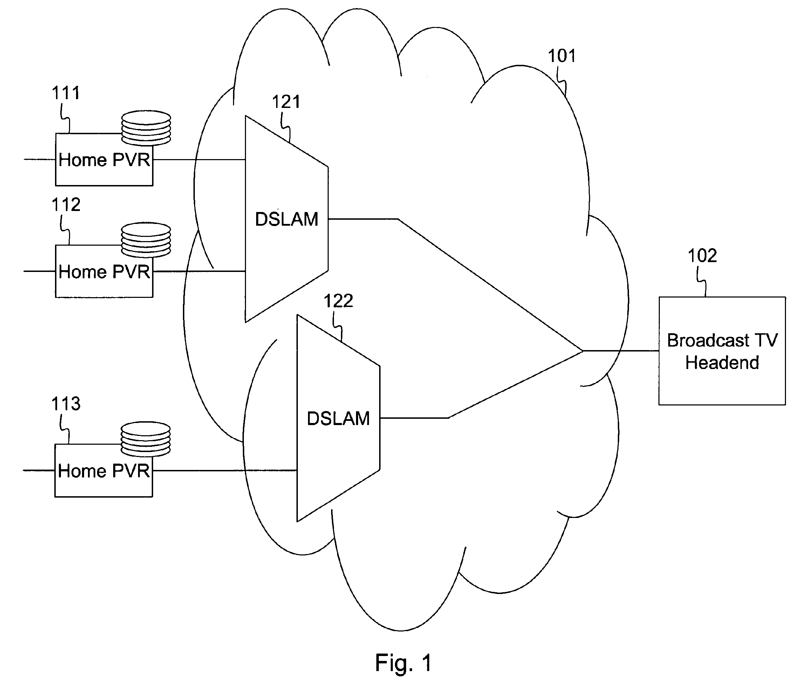

A home PVR device like for instance Sony's High Definition Digital Video Recorder DHG-HDD500 is very similar to known analogue VCRs or Video Cassette Recorders, but have built-in memory (like a hard disk or RAM) for the recording of TV programmes. Fig. 1 shows a configuration with Home PVR devices 111, 112 and 113 that receive broadcasted TV programmes from a Broadcast TV Headend 102. The TV programmes are broadcasted through a network including DSLAMs (Digital Subscriber Line Access Multiplexers) 121 and 122 to terminate the last mile point-to-point ADSL (Asymmetric Digital Subscriber Line) connections. The Home PVR devices 111, 112 and 113 are located behind the ADSL end user modems that terminate the ADSL connections in the respective subscriber's homes. Such a home PVR device like 111, 112 and 113 in Fig. 1 can be programmed in advance to record a broadcasted TV show at a given time. Digital home PVR devices enable recording a TV show and watching it at a later time, watching a show from the beginning while it is being recorded, or watching a previously recorded show while simultaneously recording another show. Certain digital home PVR devices have advanced features like pausing or rewinding while watching a normal broadcasted programme. To pause a broadcasted TV show while watching it, the home PVR starts recording the broadcasted programme that is being watched and continues playing the programme on instruction of the viewer while it keeps recording the ongoing broadcast.

A home-based PVR device is a good solution to offer advanced capabilities on real-time viewed TV programmes like pause or rewind functionality. The home-based PVR device knows what the user is watching and can store this TV programme temporarily in case of pause or rewind instructions from the user. The home-based PVR device however has disadvantages as a solution for time-shifted TV service on all the broadcasted channels because the home-based PVR device has storage limitations and also the access link to the customer's home (for instance the ADSL connection in Fig. 1) has capacity or bandwidth limitations (e.g. xDSL technologies can only serve an order of 1-5 TV channels simultaneously). As a consequence, home-based PVR devices will always need programming in advance because the device will never be capable to record every programme on every broadcasted channel.

Further, the use of home-based PVR devices is not free of legacy issues for the consumer. What changes is that content is stored on a local memory in the home PVR device. This raises content protection issues that go beyond the access rights needed for a linear broadcast delivery, where content is viewed on a TV screen and then essentially disappears. The presence of local storage in a home PVR device multiplies rights and makes them significantly more complex. There are exciting new possibilities for consumers like downloading music clips, sport updates, etc. stored on a home-based PVR to a mobile phone, a PDA or laptop. These possibilities pose challenges to the network operator in the area of content protection. With home-based PVRs it is for instance not possible to limit the allowed play-back time, to apply pay-per-view business models, etc.

Home-based PVRs and some legacy issues in relation to the use of recorded content are described in the article "Analysis of Conditional Access Models for PVRs" by Ron Katz, accessible through the following Internet URL: http://www.broadcastpapers.com/BcastAsia04/BAsia04NDSPVRs.pdf

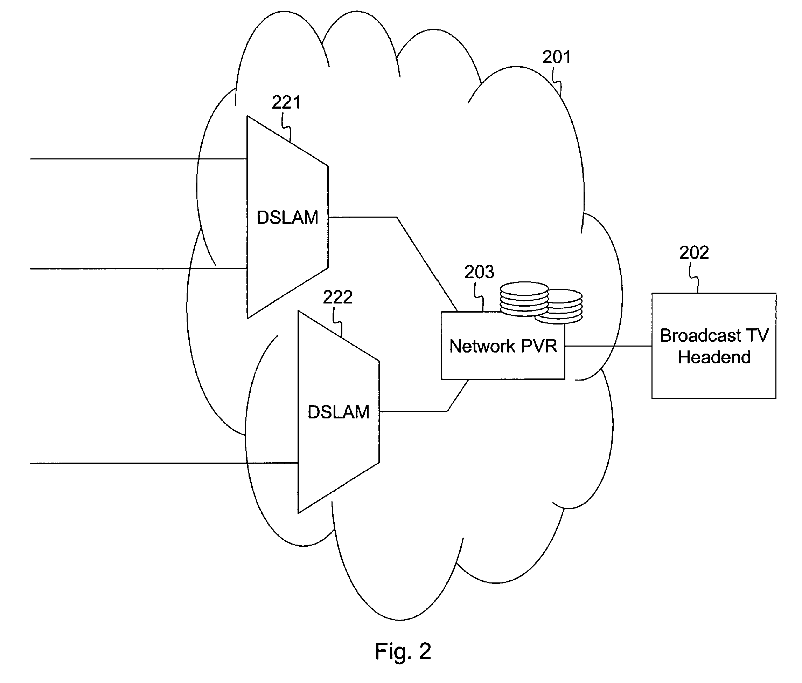

In the network-based approach, the functionality of the network server or network PVR is the equivalent of the home-based PVR but in this case it is a device located inside the network that will perform the VCR/PVR functions. Fig. 2 shows a network configuration with a Network PVR 203 that is included in the network 201 which connects the subscriber's homes to a Broadcast TV Headend 202. The network 201 as an example also includes DSLAMs 221 and 222 to terminate xDSL connections (e.g. ADSL or VDSL connections) to the subscribers. Network PVR devices like Network PVR 203 in Fig. 2 typically are a combination of a unit that records a number of broadcasted or multi-casted TV and video channels received from the Broadcast TV Headend 202, and a Video-on-Demand server which streams and unicasts the content whenever a user requests so.

The network-based approach relying on a centralized server (the network PVR) is a suitable solution for recording every programme on every broadcasted channel because the network operator knows the number of channels that are offered, and has enough bandwidth available to transport of these channels to the server device(s). The central server-based solution however is not very scalable for massive streaming to large amounts of customers, because each customer watching a programme with a time-shift will be served with a unicast stream from the central server location. Serving large amounts of customers with unicast streams from a central location is not feasible: a link with a capacity of 1 Gbps for instance can only serve about 200 customers simultaneously with a unicast video stream. Secondly, the need to terminate all remote control functions (such as rewind, pause,...) deep in the network at the central server is a further limitation to the scalability of network-based PVR solutions.

Providing more servers across the network could temporarily solve some of the scalability shortcomings of the above network-based PVR solution. However, such solution involves lots of overall storage capacity and is therefore not cost-effective.

The central server architecture for time-shifted broadcast service experiencing resembles architectures for on-demand services like Video-on-Demand, and is discussed for instance in the article "Optimal Network Architectures for On-Demand Services" by Ran Oz, John B. Carlucci and John Horrobin, retrievable via the URL: http://www.bigbandnet.com/documents/ Architectures_for_On_Demand_Services.pdf

### Summary of the Invention

According to the present invention, the above mentioned drawbacks and shortcomings of the prior art solutions are overcome by the improved device and method for recording a broadcasted programme defined respectively in claim 1 and claim 18. The device according to the present invention has a programme memory wherein fragments of the broadcasted programme are temporarily stored, and is able to share programme fragments with similar devices in order to recompose the broadcasted programme at a time-shifted moment. As defined by claims 9 to 17, the device according to the present invention will typically be integrated in network nodes, like for instance access network aggregating nodes (DSLAMs, DLCs, Fibre Aggregators, remote DSLAMs), and/or switches, routers and/or home-based terminals.

Thanks to the current invention, the PVR functionality is embedded in a distributed fashion in the network. All programmes on all broadcasted channels can be stored in a fragmented fashion in the distributed devices and a time-shifted service can be offered to the customer by recomposing the programme of his/her choice without the necessity for the customer to program the recording in advance. It is no longer necessary to store all past programmes in each device. It is even unnecessary to store a complete programme. Each device will only store small temporary fragments of a programme. A fragment might be a sliding window (e.g. containing the past 5-15 minutes of the content which has passed through the element), or it might be a fixed time fragment (e.g. the first 5-15 minutes of the programme, etc.

The present invention minimizes storage and processing requirements because the device stores fragments of programmes instead of entire programmes. Due to the reduction of required storage capacity in each device of the network, the required storage memory can cost-effectively be implemented with RAM technologies instead of disk technologies. Therefore, this invention enables to avoid mechanical components (e.g. hard disks) distributed in the network, thereby rendering the entire architecture more robust and less expensive for operation.

The present invention further is very cost-efficient because it puts no burden on a central management system like a central content manager. For the recomposing of a programme, the device in charge of the recomposing will search at the control path level the programme fragments, reducing the cost of a central management system. To realize this, all devices work together intelligently forming a peer-to-peer collaboration network.

Once the device has found a programme fragment with a neighbouring device, the neighbouring device will share the programme fragment at the data path level with the requesting device. In other words, the programme fragment will be directly streamed from the neighbouring device to the requesting device. In case of DSLAMs for instance, DSLAM A will stream the programme fragment to DSLAM B over the metro network.

The current invention also reduces the legacy issues mentioned above in relation to home-based PVRs because the distributed devices that store programme fragments are typically included in network nodes under operator's control, thus simplifying content protection and imposing certain business models by the operator.

Optionally, the device according to the present invention records programme fragments based on a recording profile/algorithm that is configured in advance, as defined in claim 2. This profile will then avoid that every element will record the same fragments.

Alternatively, the device according the present invention records programme fragments based on a dynamically negotiated recording profile, as defined in claim 3. The distributed devices then negotiate with each other at control path level. The negotiation could for instance result in recording profiles as defined in claims 4 and 5. For example: a first device might store each video frame of a programme within a sliding window of length 2 minutes for 5 minutes after the broadcast, a second device elsewhere in the network might store a 10 minute programme fragment for more than 2 hours, etc.

The negotiations will typically take into account parameters like available storage capacity in the programme memories, available processing power, available bandwidth on connections, network topology information, user profiles, etc., as defined in claim 6. A selection of these parameters can be shared between the distributed devices at regular time instances or on request, such that the information can be used by each device to decide which programme fragments to store, and which other devices to contact for negotiating the storage of further fragments.

Optionally, the device according to the present invention further incorporates user request terminating functionality as defined in claim 7. This way, whenever a request is received from a customer, the distributed device starts to find the programme fragments related to this request such that the programme can be re-composed and streamed to the customer.

In deciding which device or network element to contact in order to receive a specific fragment, the requesting device shall take into account parameters like the available processing power of and, the available bandwidth on links towards the network element that will have to stream the fragment. This is defined in claim 8. If for instance a first DSLAM needs a programme fragment for recomposing a programme on request of one of its connected users, and this first DSLAM knows that the fragment is available in both a second DSLAM and a third DSLAM, then the first DSLAM has to decide which DSLAM to contact in order to obtain the programme fragment. The first DSLAM will typically request the DSLAM that has most processing power and sufficient bandwidth available on its outgoing links to stream the fragment.

### Brief Description of the Drawings

Fig. 1 illustrates a home-based Personal Video Recorder solution as known in the prior art;
Fig. 2 illustrates a network-based Personal Video Recorder solution as known in the prior art;
Fig. 3 illustrates a network including distributed embodiments of the device for recording broadcasted programmes according to the present invention; and
Fig. 4 illustrates an embodiment of the device for recording broadcasted programmes according to the present invention.

### Detailed Description of Embodiment(s)

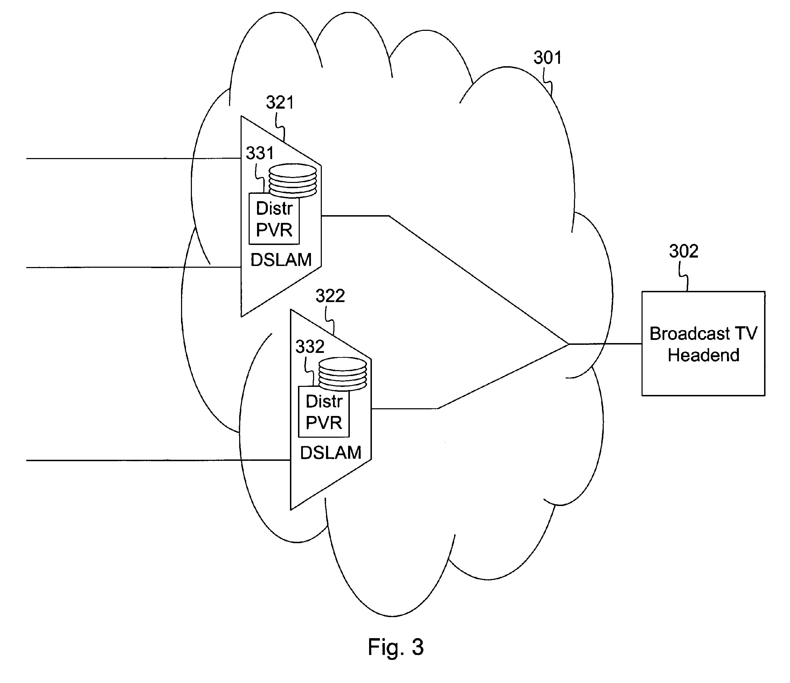

Fig. 3 shows a Broadcast TV Headend 302 and a network 301 through which the Broadcast TV Headend 302 connects towards customer premises. The aggregation network that forms part of network 301 is xDSL based. Two of the DSLAMs that terminate the ADSL or VDSL subscriber loops are shown as 321 and 322 in Fig. 3. These DSLAMs 321 and 322 in addition to the traditional DSL line termination boards, and network termination board, contain an additional distributed PVR board, 331 and 332 respectively. The distributed PVR boards 331 and 332 represent devices for recording broadcasted TV programmes according to the present invention. These boards 331 and 332 are able to record fragments of the TV programmes broadcasted by the Broadcast TV Headend 302 according to record profiles which are dynamically negotiated between these boards. The boards 331 and 332 further terminate user request signals, like zapping and remote control signals, and depending on these user requests are able to collaborate in a peer-to-peer fashion to recompose a TV programme that is requested by a subscriber at a time-shifted instant. Also the other DSLAMs in network 301 which are not drawn in Fig. 3, and eventually other network elements or NEs not drawn in Fig. 3 like edge routers, switches, etc, may be equipped with distributed PVR boards similar to 331 and 332. All these boards collaborate with each other to store in a distributed fashion the TV programmes broadcasted by Broadcast TV Headend 302 according to dynamically negotiated record profiles, and to recompose a TV programme and stream it in a unicast way to the customer whenever a customer requests so.

When the access network provider for instance is offering an IPTV service to the end-customers, the network elements 321 and 322 are actively involved in the multicast or broadcast delivery process. The network element 321 or 322 is informed on which end-customer is watching which channel(s), e.g. via the Internet Group Management Protocol, IGMP, and will duplicate the packets that belong to that TV channel for forwarding to the appropriate end-customers. Due to the fact that these network elements 321 or 322 already actively participate in the normal multicast delivery, it is quite easy for them to copy part of the packets also in a programme memory inside their distributed PVR 331 or 332. The stored information can be streamed after some time to be used to offer the time-shifted service.

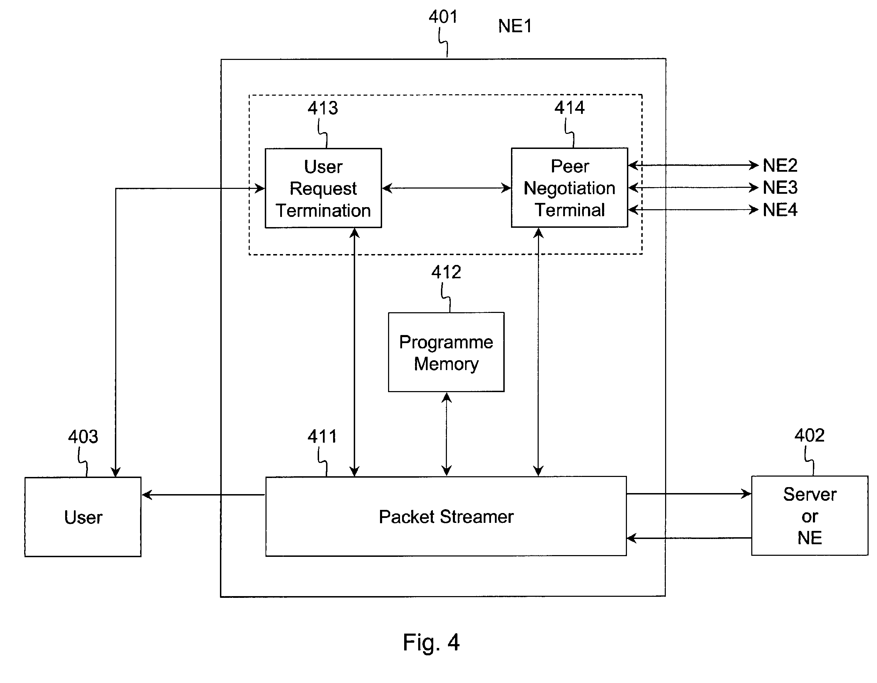

Fig. 4 is a functional block diagram showing in more detail the contents of a distributed PVR board 401, which corresponds to the boards 331 and 332 in Fig. 3. The board 401 is included in a network element NE1 which could for instance be DLAM 321 or DSLAM 322. The distributed PVR board 401 in Fig. 4 contains a fast packet streaming processor 411, a programme memory 412, and a second, onboard processor that on the one hand terminates and processes user requests in 413 and on the other hand terminates and processes peer-to-peer negotiations with other network elements in 414. The User Request Terminal 413 is operatively connected at control level to users' customer equipment like User 403 whilst the Peer Negotiation Terminal 414 is operatively connected at control level to other network elements, e.g. NE2, NE3, NE4. The Packet Streamer 411 is operatively connected at data path level to the users' customer equipment like User 403 (which could for instance be a TV tuner, a decoder, a set top box, a DSL modem, a PC, ...), to other network elements, and optionally to backup servers (e.g. a central server which stores entire TV programmes). The other network elements and servers where Packet Streamer 411 might be connected to, are represented by 402 in Fig. 4. Packet Streamer 411 internally is interconnected with Programme Memory 412 and with User Request Termination 413 and Peer Negotiation Terminal 414 in the onboard processor.

Programme Memory 412 can be implemented by a hard disk or (more preferably) RAM memory. It is a rather small memory unit, for instance having a storage capacity between 1 and 5 gigabytes, wherein the video packets are stored that are applied thereto by the packet streaming processor 411.

Packet streaming processor 411 is aware of a recording profile according to which small fragments, e.g. a few minutes of broadcasted programs have to be stored in memory 412. The recording profile is not configured in advance. Instead, all distributed PVRs in the network negotiate between each other which fragments of which programmes are to be stored in the different distributed PVRs, and for how long, thereby dynamically creating and adapting these record profiles. As an example, the negotiation can result in a first distributed PVR (e.g. 331 in Fig. 3) that stores each video frame of a programme for 5 minutes after the broadcast, in a second distributed PVR (e.g. 332 in Fig. 3) that stores only 10 minutes of a programme but this for more than 2 hours, etc. The Packet Streamer 411 at each point in time is aware of its negotiated recording profile/algorithm and selects the video packets out of broadcasted TV programmes which according to that recording profile have to be memorized in memory 412.

For negotiating the record profile, the onboard processor is foreseen with peer-to-peer proxy functionality integrated in Peer Negotiation Terminal 414. Through the negotiations it is guaranteed that all fragments are distributed over the network, and can even seamless migrate from one network node to another so that the requests from the clients can be optimally served with a minimum of bandwidth, storage, etc. Therefore, during these negotiations the following parameters are taken into account:
- available local processing power in the packet streamer;
- available local storage capacity in the programme memory;
- network topology between the network elements;
- available network bandwidth, e.g. on the DSL loops to the customers;
- programmes that are watched by the directly connected customers;
- the level of redundancy required for the programmes; and
- the load on an optional central (traditional) network PVR streaming server that stores entire programmes and serves as a backup server should programme fragments be unretrievable through collaboration between the distributed PVR devices.

A peer-to-peer protocol is used between the distributed PVRs in order to share the above parameter values at regular time intervals. The values are used by the distributed PVRs to adapt their record profiles or suggest record profile adaptations to other network nodes.

New requests for time-shifted viewing of a TV programme received from a subscriber (e.g. User 403) are terminated at the User Request Termination 413 which is integrated in the above mentioned onboard processor. For the user requests, the remote control signalling from the user will be encapsulated for instance in Real Time Streaming Protocol or RTSP signalling and be forwarded to User Request Termination 413. The User Request Termination 413 thereupon instructs the Packet Streamer 411 to stream the requested programme to the User 403. Peer Negotiation Terminal 414 who is knowledgeable on the recording profiles of the different network elements, instructs the Packet Streamer 411 where to get the different programme fragments. Certain programme fragments will be read out of the local Programme Memory 412, whereas other programme fragments which are not stored in Programme Memory 412 will be requested to other network elements. The network elements or peers whereto the missing fragments have to be requested, are selected by the Peer Negotiation Terminal 414. For the peer selection, certain parameters are taken into account like the available bandwidth on the data path to the peer, the available processing power of the peer. Eventually, should a programme fragment not be deliverable by any of the network peers, the Packet Streamer 411 might request a central backup server which stores entire programmes to forward such fragment. The Packet Streamer 411 has the intelligence to recompose the programme from the different fragments. It thereto uses for instance time stamps or sequence numbers which are inside the header of the video packets.

Further, the onboard processor incorporating the User Request Termination 413 and the Peer Negotiation Terminal 414 after terminating the remote control signalling coming from the customer, uses the local storage capacity in the Programme Memory 412 for hiding these requests as much as possible from the network: e.g. when a user pauses the broadcast TV programme, the device 401 starts buffering that programme for some time in Programme Memory 412, in order to be prepared that thirty seconds later the user presses 'play' again.

Although the present invention has been illustrated by reference to specific embodiments, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example, the xDSL technology might be replaced with other access technologies (e.g. PON or cable based access networks), the record profiles may be predefined and stored in ROM instead of being dynamically adjustable as in the above described embodiment, the parameters used for negotiating the record profiles and/or the parameters used for determining the network nodes which will be requested to stream certain programme fragments may differ from the ones defined here above (e.g. a different selection or combination of parameters, a weighted set of parameters, etc.), the distributed PVR device need no necessarily be implemented as a card or board but could for instance be a stand-alone device or in the future even be integrated in a single chip, 414 and 413 need no necessarily be integrated in a single onboard processor but could form part of separate components, etc.

## Claims

1. A device (401) for recording a broadcasted programme, said device (401) comprising a programme memory (412),
**CHARACTERIZED IN THAT**
a. said device (401) is for inclusion in a packet forwarding network element (NE1); and
b. said programme memory (412) is adapted or controlled to temporarily store programme fragments of said broadcasted programme; and
c. said device (401) further comprises means (411) for sharing programme fragments with similar devices (331, 332) in order to recompose said broadcasted programme at a time-shifted moment.

2. A device (401) for recording a broadcasted programme according to claim 1,
**CHARACTERIZED IN THAT**
d 1. said device (401) further comprises a record profile memory for storing a predefined recording profile according to which said programme fragments are to be stored in said programme memory (412).

3. A device (401) for recording a broadcasted programme according to claim 1,
**CHARACTERIZED IN THAT**
d2. said device (401) further comprises a peer-to-peer communication terminal (414) for dynamically negotiating with said similar devices (331, 332) a recording profile according to which said programme fragments are to be stored in said programme memory (412).

4. A device (401) for recording a broadcasted programme according to claim 3,
**CHARACTERIZED IN THAT** said recording profile is indicative for the relative time interval in said broadcasted programme of said programme fragments to be stored in said programme memory (412).

5. A device (401) for recording a broadcasted programme according to claim 3,
**CHARACTERIZED IN THAT** said recording profile is indicative for the length of a sliding window containing said programme fragments to be stored in said programme memory (412).

6. A device (401) for recording a broadcasted programme according to claim 3,
**CHARACTERIZED IN THAT** said recording profile takes into account one or more parameters of said device (401) and said similar devices (331, 332) including available storage capacity in said programme memory (412), available processing power, available bandwidth on connections, network topology parameters, user profiles.

7. A device (401) for recording a broadcasted programme according to claim 1,
**CHARACTERIZED IN THAT**
e. said device (401) further comprises a user request terminal (413) for terminating and processing user request signalling.

8. A device (401) for recording a broadcasted programme according to claim 1,
**CHARACTERIZED IN THAT**
said device (401) further comprises means (414) to request a programme fragment to other devices (331, 332) selected on the basis of one or more parameters of said other devices (331, 332) including available processing power, available bandwidth on connections, network topology parameters.

9. A device (401) for recording a broadcasted programme according to claim 1,
**CHARACTERIZED IN THAT** said device (401) is included in an access network aggregation node.

10. A device (401) for recording a broadcasted programme according to claim 9,
**CHARACTERIZED IN THAT** said access network aggregation node is a Digital Subscriber Line Access Multiplexer (321, 322).

11. A device (401) for recording a broadcasted programme according to claim 9,
**CHARACTERIZED IN THAT** said access network aggregation node is a Digital Loop Carrier.

12. A device (401) for recording a broadcasted programme according to claim 9,
**CHARACTERIZED IN THAT** said access network aggregation node is an Optical Fibre Aggregator.

13. A device (401) for recording a broadcasted programme according to claim 1,
**CHARACTERIZED IN THAT** said device is included in a packet switching network node.

14. A device (401) for recording a broadcasted programme according to claim 1,
**CHARACTERIZED IN THAT** said device is included in a packet routing network node.

15. A device (401) for recording a broadcasted programme according to claim 1,
**CHARACTERIZED IN THAT** said device is included in a remote unit.

16. A device (401) for recording a broadcasted programme according to claim 15,
**CHARACTERIZED IN THAT** said remote unit is a mini-Digital Subscriber Line Access Multiplexer.

17. A device (401) for recording a broadcasted programme according to claim 1,
**CHARACTERIZED IN THAT** said device is included in a home terminal.

18. A method for recording a broadcasted programme,
**CHARACTERIZED IN THAT** said method comprises:
a. temporarily storing programme fragments of said broadcasted programme in networked, distributed devices (331, 332); and
b. sharing programme fragments between said distributed devices (331, 332) in order to recompose said broadcasted programme at a time-shifted moment.
